# EUROPEAN PATENT APPLICATION

(11) **EP 1 510 669 A1**
(43) Date of publication of application: **02.03.2005**
(21) Application number: 03019733.9
(22) Date of filing: 29.08.2003
(51) Int. Cl.: F01N 3/028, F01N 3/20, F01N 3/035

(54) **Microwave added filter core for engine exhaust**

(71) Applicant: Chang, Ching Hui, Sijhih City, Taipei Country (TW)
(72) Inventor: Chang, Ching Hui, Sijhih City, Taipei Country (TW)
(74) Representative: Casalonga, Axel

(57) **Abstract**

This invention is a microwave added filter core for engine exhaust. It emphasizes a filter core (1) which can heat and burn the micro particles (accumulated carbon) accumulated inside the passage of the filter core, or advance the working time of the filter core (1), or advance the catalysis of the filter core by means of the radiation of the microwave. The major invention is that one microwave device (2) is placed inside the exhaust filter core (1) of the engine, or at one end of the inlet or outlet of the ceramic catalyst filter. In order to prevent the radiation leaking, there is a metal net (3) at the exhaust filter core (1) in the engine exhaust pipe (A), or at another end of the ceramic catalyst filter. By means of such structural design, the micro particles accumulated inside the passage of the filter core can be burnt directly by the high temperature of the microwave radiation. It doesn't need to be through or wait for the self-burning of the catalyst covering on the surface of the passage of the filter core. Furthermore, the high radiation heat can directly heat the catalyst on the passage of the filter core, and advance the catalysis or advance the working time of the ceramic catalyst filter. It effectively enhances the temperature of the start burning. By means of this principle, this invention can be used in the engine filter cores of different fuels. The filter cores with different fuels will create different effects.

## Description

### [ BACKGROUND OF THE INVENTION]

Engine acts an important role in today's industry. The ordinary engines can be divided into diesel engine and petrol engine. Both engines have their own advantages and disadvantages. Any of the two engines will produce black smoke and waste gas. This black smoke (waste gas) is the number one murder of air pollution. In order to reduce air pollution, every country has a regulation that the engine exhaust pipe needs to add a filter core. Among these engines, the traffic vehicles (such as airplanes, cars and ships...) have the most sever regulations. Therefore, every maker adds a filter core (smoke filter) in the engine exhaust pipe to reduce air pollution rate. Nowadays the filter core with its passage covered with catalyst is sold in the market. It increases the filter effect and purifies the black smoke and waste gas. The catalyst at a certain temperature will start the catalysis, and produce a self-burning matter. The self-burning temperature of the catalyst is about 375°C.

### For diesel engine:

The diesel engine has bigger particles. The particles will accumulate inside the passage of the filter core. We call them accumulated carbon. Only when the temperature of the exhaust waste gas of the engine heats up to over 375°C, the catalyst covering on the passage of the filter core can start the catalysis and
Self-burning, and also burns the accumulated carbon. However, it always needs to wait for a long period of time so as to get such a high temperature. During the waiting period, the accumulated carbon continues to increase. When the temperature heats up to this temperature, it cannot effectively burn away all the accumulated carbon, or eventually the temperature cannot heat up to this temperature, and the accumulated carbon cannot be completely burnt away. After a period of time, the filter core will be ineffective or damaged, and needs to be replaced. It is not only a trouble, but also an air pollution and a waste of the filter core.

### For petrol engine:

It neither produces black smoke nor accumulates the carbon like the diesel engine, but the catalyst covering on the passage of the filter core needs a start-burning temperature of 250°C so as to start the catalysis. Therefore, it always needs a period of time. Thus, the temperature cannot be effectively increased. The time to reach the working temperature of the catalyst, or to reach the temperature from catalysis to self-burning becomes longer. The filter effect is greatly reduced.

No matter what fuel is used for the filter core, or what catalyst is used in the passage of the ceramic catalyst filter, if you want the catalyst covering on the passage of the filter core to produce a chemical reaction of self-burning so as to bum away the accumulated carbon grains, or want to shorten the time of the start burning of the catalyst, in most of the occasions it depends on the operation of the engine to produce heat. Through the exhaust system, the heat is passed on to the filter core or the passage of the ceramic catalyst filter. Thefilter core or the ceramic catalyst filter will absorb the heat till it reaches to the self-burning or start-burning temperature. Then, the catalyst covering on the passage of the filter core start action. Therefore, it needs to wait for a longer time, and greatly reduces its effect.

### [SUMMARY OF THE INVENTION]

This invention is a microwave added filter core for engine exhaust. It emphasizes a filter core which can heat and burn the micro particles (accumulated carbon) accumulated inside the passage of the filter core, or advance the working time of the filter core, or advance the catalysis of the filter core by means of the radiation of the microwave. The major invention is that one microwave device is placed inside the exhaust filter core of the engine, or at one end of the inlet or outlet of the ceramic catalyst filter. In order to prevent the radiation leaking, there is a metal net at the exhaust filter core in the engine exhaust pipe, or at another end of the ceramic catalyst filter. By means of such structural design, the micro particles accumulated inside the passage of the filter core can be burnt directly by the high temperature of the microwave radiation. It doesn't need to be through or wait for the self-burning of the catalyst covering on the surface of the passage of the filter core. Furthermore, the high radiation heat can directly heat the catalyst on the passage of the filter core, and advance the catalysis or advance the working time of the ceramic catalyst filter. It effectively enhances the temperature of the start burning. By means of this principle, this invention can be used in the engine filter cores of different fuels. The filter cores with different fuels will create different effects.

However, today above problem is not effectively solved. In view of the above product defect, the inventor is deeply regretful. I, therefore, have decided to devote myself to the research and the development. I take pains to thing about it all day long. After a continuous research and improvement, and based on many years of experiences on selling the relevant products, finally I invent this invention - microwave added filter core for engine exhaust which can improve the defect of the ordinary filter core.

Therefore, the main purpose of this invention is to provide a microwave added filter core for engine exhaust. The major invention is that one microwave device is placed inside the exhaust filter core of the engine, or at one end of the inlet or outlet of the ceramic catalyst filter. In order to prevent the radiation leaking, there is a metal net at the exhaust filter core in the engine exhaust pipe, or at another end of the ceramic catalyst filter. By means of such structural design, the micro particles accumulated inside the passage of the filter core can be burnt directly by the high temperature of the microwave radiation. It doesn't need to be through or wait for the self-burning of the catalyst covering on the surface of the passage of the filter core. Furthermore, the high radiation heat can directly heat the catalyst on the passage of the filter core, and advance the catalysis or advance the working time of the ceramic catalyst filter. It effectively enhances the temperature of the start burning. By means of this principle, this invention can be used in the engine filter cores of different fuels. The filter cores with different fuels will create different effects.

In order to allow the Review Committeemen have a clear idea about the technology used (the product effect), I give an actual example with drawings as shown below.

### [BRIEF DESCRIPTION OF THE DRAWINGS]

- FIG. 1:: A solid decomposed drawing of the invention
- FIG. 2:: A sectional view of the assembling drawing of the invention
- FIG. 3:: Another sectional view of the assembling drawing of the invention used in the diesel engine.
- FIG. 4:: Another sectional view of the assembling drawing of the invention used in the petrol engine.

### [DETAILED DESCRIPTION OF THE PREFERRED EMBODIMENT]

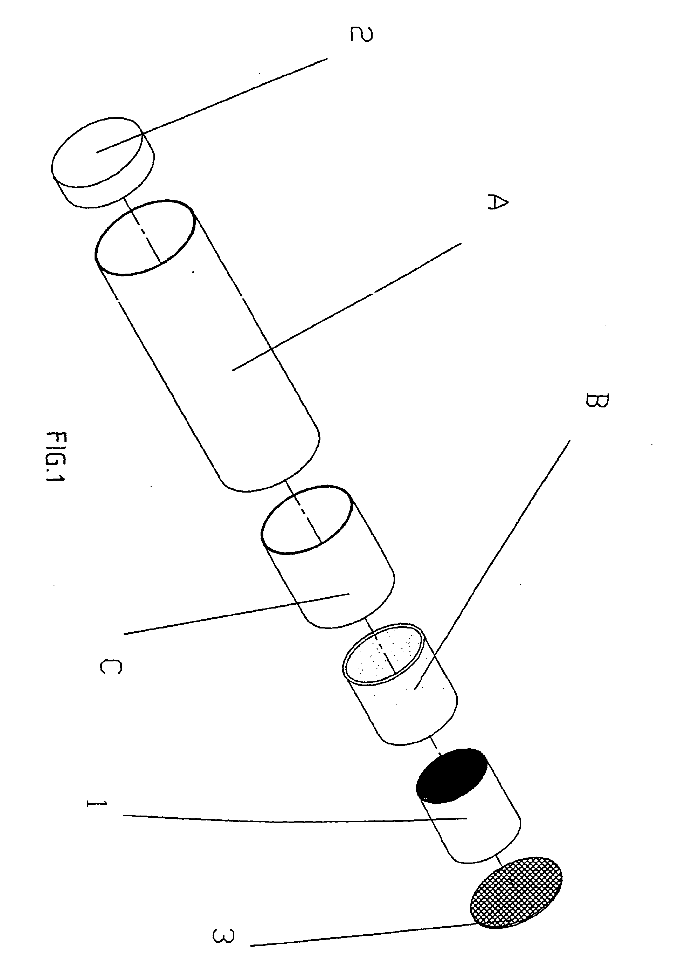

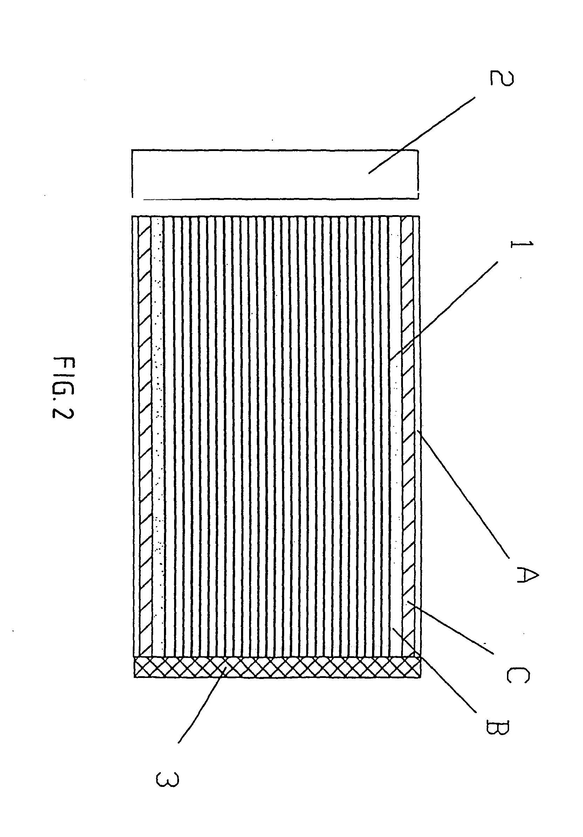

Firstly, refer you to FIG. 1 and FIG. 2. They are the solid decomposed drawing and the sectional view of assembling drawing of the invention. From these drawing, it is understood that this invention is a microwave added filter core for engine exhaust.

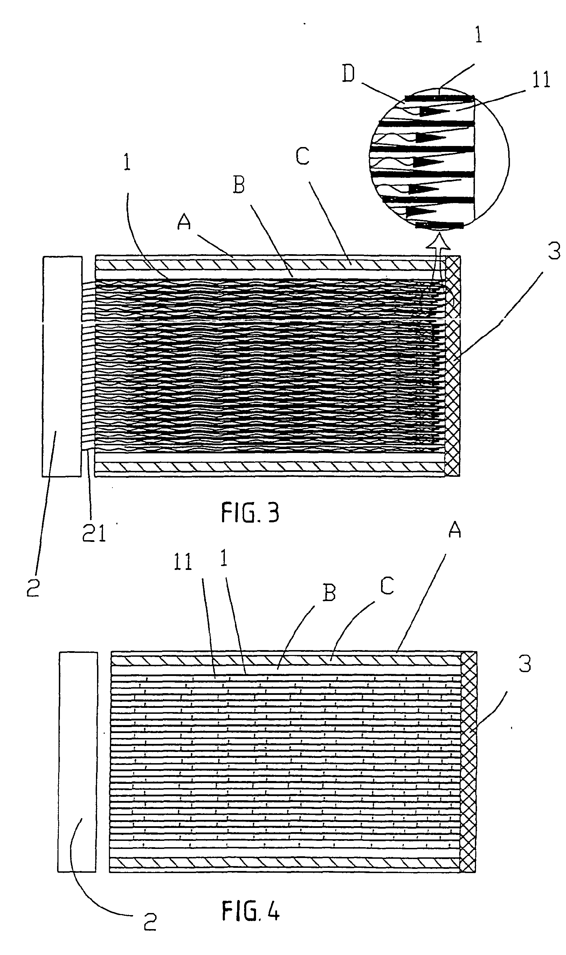

The major design is that one microwave device (2) is installed on the filter core in the engine exhaust pipe (A) or at any end of the air inlet or the air out let of the ceramic catalyst filter (1). In order to prevent the microwave radiation leaking, a metal net (3) is installed on the filter core of the engine exhaust pipe (A) or at another end of the ceramic catalyst filter (1). In order to efficiently keep the heat of the filter core or the ceramic catalyst filter (1), and raise the temperature of the filter core or the ceramic catalyst filter (1), the filter core or the outer layer of the ceramic catalyst filter (1) is wrapped with one ceramic cotton (B) and one metal can (C). FIG. 3 and FIG. 4 show the sectional drawings of the assembling unit when this structural design is used. From the drawings, it is understood that when the microwave device (2) is started, the microwave device (2) will radiate microwave radiation (21) to the filter core or the passage (11) of the ceramic catalyst filter (1). At this time the microwave radiation (21) moves toward the reverse direction of the exhausted black smoke/waste gas. Namely, the microwave radiation (21) goes through the filter core from the air outlet of the exhaust pipe or through the passage (11) of the ceramic catalyst filter (1) to the air inlet of the exhaust pipe (A). The microwave device (2) can produce high temperature microwave radiation (21) to heat and burn the carbon grains (D) accumulated in the passage (11) of the filter core. (See FIG. 3). It doesn't need to wait for the catalyst covering on the passage (11) of the filter core to create a chemical change of self-burning.

For petrol engine, the microwave device (2) can produce high temperature microwave radiation (21), and directly heat the catalyst covering on the filter core or on the passage (11) of the ceramic catalyst filter (1). The catalyst on the filter core or on the passage (11) of the ceramic catalyst filter (1) will absorb the thermal energy of the microwave radiation (21), and advance the working time and the temperature reaction of the catalyst. It effectively raises the start-burning temperature. (See FIG. 4.) The microwave device (2) produces microwave radiation (21). This microwave radiation (21) will be blocked by a metal net (3) at the air inlet of the exhaust pipe (A). Thus, the microwave radiation (21) won't leak, and hurt humans or goods. By means of this feature, this device can be used on the engine filter cores or the ceramic catalyst filter (1) of different fuels, and the engine filter cores of different fuels have different effects.

To sum up the above statements, this invention "microwave added filter core for engine exhaust" has thoroughly improved each defect of the current filter cores. Besides, this invention has become a finished product manufactured according to the above mentioned technology, method and the structure. Its effect has been mentioned in this description. Therefore, this invention consists of "Progressive" and "Practical". Besides, this invention has never been disclosed in any public publications or publicly used. Thus, the "Innovative" of the invention is no doubt. It is a rare invention. I, therefore, apply for the patent.

## Claims

1. A microwave added filter core for the engine exhaust, which comprises a microwave device on the filter core of the engine exhaust pipe or at the other end of the air inlet or the air outlet of the ceramic catalyst filter (1). In order to prevent the microwave radiation leaking, there is a metal net at the filter core of the engine exhaust pipe, or at another end of the ceramic catalyst filter (1) as its feature.
